# EUROPEAN PATENT APPLICATION

(11) **EP 2 287 801 A2**
(43) Date of publication of application: **23.02.2011**
(21) Application number: 10168573.3
(22) Date of filing: 06.07.2010
(51) Int. Cl.: G06Q 30/00

(54) **Information processing apparatus, information processing method and computer program**

(30) Priority: 13.07.2009 JP 2009164395
(71) Applicant: Sony Corporation, Tokyo 108-0075 (JP)
(72) Inventor: Nagasaka, Hideo, Tokyo 108-0075 (JP); Sumiyoshi, Masahide, Tokyo 108-0075 (JP); Kimijima, Tadaaki, Tokyo 108-0075 (JP)
(74) Representative: Beder, Jens

(57) **Abstract**

An information processing apparatus includes: a receiving unit receiving operation logs of a first device possessed by a user; and a control unit determining critical points of the first device based on the operation logs and personalizing advertising information corresponding to a second device which is different from the first device based on the critical points of the first device.

## Description

### BACKGROUND OF THE INVENTION

### 1. Field of the Invention

The present invention relates to an information processing apparatus, an information processing method and a computer program generating information to be provided to a user, and particularly relates to an information processing apparatus, and an information processing method and a computer program providing advertising information concerning new products to consumers possessing various kinds of products.

### 2. Description of the Related Art

Presently, various kinds of industrial products such as electrical household appliances, information devices and communication devices are circulated in the market. As one of effective methods of activating the market and promoting purchase of products by consumers, it is possible to cite a method of presenting products by using advertising information in which the use of products are written.

As means for presenting advertising information, it is common to use advertising media such as leaflets or to use advertising space in television programs. However, in either case, the same advertising information is uniformly presented to many consumers having different needs. Therefore, it is presumed that an appealing effect obtained from advertising information is limited.

Recently, methods of placing advertising media on a web page or notifying advertising media by using e-mail are widely used along with the popularization of communication networks such as Internet. For example, an advertising leaflet system in which an advertising leaflet image is registered in a database by a data server company and the advertising leaflet image is delivered to users through the Internet is proposed (for example, refer to JP-A-2002-163539 (Patent Document 1)).

There is also proposed an advertisement selection device of selecting advertising information to be inserted in advertising space in a moving picture content whose streaming delivery is performed based on the number of times each advertising information has been shown to viewers (for example, refer to Japanese Patent No. 4229294 (Patent Document 2)).

Additionally, there is also proposed a program execution device in which advertising data is switched to data designated by selection information received through a communication line in a scene at which an advertisement appears at a part of an image among scenes corresponding to the progress of a video game during a game program is executed (for example, refer to Japanese Patent No. 4254905)).

In recent years, it becomes easy to control the presentation method of advertising information by computerizing advertizing information. The same advertising information has different appealing effects according to consumers. At the same time, purchase motivation of the same (or the same type of) consumer varies every hour according to specifications of devices currently possessed by the consumer or the operating state of devices. It is presumed that the appealing effect of advertising information with respect to the consumer also varies in accordance with variation of purchase motivation.

### SUMMARY OF THE INVENTION

It is desirable to provide an excellent information processing apparatus, an information processing method and a computer program capable of appropriately providing advertising information concerning new products to consumers using various kinds of products.

It is also desirable to provide an excellent information processing apparatus, an information processing method and a computer program capable of providing advertising information having high appealing effects with respect to respective consumers.

According to an embodiment of the invention, there is provided an information processing apparatus including a receiving unit receiving operation logs of a first device possessed by a user and a control unit determining critical points of the first device based on the operation logs and personalizing advertising information corresponding to a second device which is different from the first device based on the critical points of the first device.

According to another embodiment of the invention, the control unit of the information processing apparatus according to the above-mentioned embodiment of the invention is configured to acquire advertising information concerning the second device, to determine appealing points of the second device to be advertising effectiveness by comparing specifications between the first device and the second device, and to determine importance of respective specification items included in the second device by comparing critical points of the first device and appealing points of the second device and personalizing advertising information for the user based on the determination result of importance.

According to still another embodiment of the invention, the control unit according to the above-mentioned embodiment of the invention is configured to determine a specification item indicating that performance of the second device has been improved by a given value or more as compared with the first device as an appealing point of the second device by comparing the first device with the second device with respect to each specification item.

According to yet another embodiment of the invention, the control unit according to the above-mentioned embodiment of the invention is configured to extract a specification item close to the upper limit of performance at the time of routine use by the user as a critical point of the first device by comparing performance of the first device with respect to each specification item with the operation logs.

According to still yet another embodiment of the invention, the control unit according to the above-mentioned embodiment of the invention is configured to give higher importance to the specification item to be the critical point of the first device among specification items determined as appealing points of the second device.

According to further another embodiment of the invention, the control unit according to the above-mentioned embodiment of the invention is configured to perform appealing point determination processing of the second device or the importance determination processing of respective specification items included in the second device by considering at least one of a purchase price range of the second device or a replacement cycle by purchase of the first device.

According to still further another embodiment of the invention, the control unit according to the above-mentioned embodiment of the invention is configured to determine at least one of arrangement, an area size, a character font, an image size and a display order of respective specification items in advertising information of the second device based on the importance with respect to each specification item.

According to yet further another embodiment of the invention, when the second device is manufactured by a BTO (Build To Order) system, the control unit according to the above-mentioned embodiment of the invention is configured to predict a necessary specification value with respect to the specification item extracted as the critical point of the first device, selecting an item satisfying the specification value predicted within a range of selection allowed in the second device and determining the item as an appealing point of the second device.

According to still yet further another embodiment of the invention, concerning a new product to which one or more accessories can be attached, the control unit according to the above-mentioned embodiment of the invention is configured to predict a necessary specification value with respect to the specification item extracted as the critical point of the first device and to determine an accessory satisfying the specification value predicted within a range of selection allowed in the second device as an appealing point of the second device.

According to a further embodiment of the invention, there is provided an information processing method including the steps of receiving operation logs of a first device possessed by a user and determining critical points of the first device based on the operation logs and personalizing advertising information corresponding to a second device which is different from the first device based on the critical points of the first device.

According to a still further embodiment of the invention, there is provided a computer program written in a computer readable format so as to execute information processing for providing the user with advertising information concerning a second device on a computer, allowing the computer to function as a receiving unit receiving operation logs of a first device possessed by a user and a control unit determining critical points of the first device based on the operation logs and personalizing advertising information corresponding to the second device based on the critical points of the first device.

The computer program according to the embodiment defines the computer program written in the computer readable format so as to realize given processing on the computer. In other words, the computer program according to the embodiment is installed in the computer, thereby realizing cooperative operation on the computer and obtaining the same operation and effect as the information processing apparatus according to embodiment of the invention.

According to the embodiments of the invention, it is possible to provide the excellent information processing apparatus, the information processing method and the computer program capable of suitably providing consumers which use various types of products with advertising information concerning the new product.

Also according to the embodiments of the invention, it is possible to provide the excellent information processing apparatus, the information processing method and the computer program capable of providing the advertising information having high appealing effects with respect to respective consumers.

According to the embodiments of the invention, selection of users fitting into advertising information and extraction of critical point of specifications in the possessed device of the user are performed by comparing the possessed device currently used by the user with the new product, and advertising information of the new product is personalized based on comparison with respect to the possessed device of the user to thereby further increase appealing effects of advertising information.

### BRIEF DESCRIPTION OF THE DRAWINGS

Fig. 1 is a view schematically showing a configuration of an advertising information providing system according to an embodiment of the invention;
Fig. 2 is a flowchart showing a schematic processing procedure for proving a user with advertising information by an advertisement delivery server;
Figs. 3A to 3C are views for explaining the processing flow of providing advertising information;
Fig. 4 is a diagram showing a functional configuration for executing the processing procedure shown in Fig. 2 by the advertisement delivery server;
Fig. 5 is a diagram showing an operation sequence for creating advertising information personalized with respect to each user in the advertisement delivery server 1;
Fig. 6 is a flowchart showing a processing procedure for generating advertising information in an advertising information providing unit 20;
Fig. 7 is a view showing an example of advertising information personalized by determining a display format of each specification item based on the importance;
Fig. 8 is a view showing an example of advertising information in which the difference of device specifications between the new product and the possessed device of the user is displayed in a visual format;
Fig. 9 is a view showing another example of advertising information in which the difference of device specifications between the new product and the possessed device of the user is displayed in a visual format;
Fig. 10 is a view showing another example of advertising information in which the difference of device specifications between the new product and the possessed device of the user is displayed in a visual format;
Fig. 11A is a chart showing options for selection of respective specification items of the new product in the BTO system;
Fig. 11B shows specifications of the new product determined so as to satisfy presumed necessary specification values concerning specification items of more than the given number as well as based on cost calculation concerning the rest of specification items;
Fig. 12 is a view showing advertising information for recommending accessories of the digital camera;
Fig. 13 is a view showing performances of the possessed device of the user in respective specification items when the product category is the digital camera;
Fig. 14 is a diagram showing a configuration example of an image processing apparatus operating as the advertisement delivery server;
Figs. 15A to 15C are charts showing determination conditions and determination results of appealing points of the new product, determination conditions and determination results of critical points the possessed device of the user, determination conditions and determination results of importance, calculation methods and calculation results of advertising data in respective specification items.

### DESCRIPTION OF THE PREFERRED EMBODIMENTS

Hereinafter, an embodiment of the invention will be explained in detail with reference to the drawings.

As one of purchase actions by consumers, "comparison purchase" is known. That is, each consumer takes the purchase action by comparing plural manufacturers and brands, or by comparing services, prices and added values between outlet stores. The comparison allows the consumer to determine merits and demerits of respective products.

In an embodiment of the invention, the selection of users fitting into advertising information and extraction of critical points in device specifications are performed by comparing a device currently used by each user with a new product. In the present specification, a method of presenting advertising information based on the comparison with respect to the possessed device which is currently used by the user is referred to as "comparison-type recommend". According to the comparison-type recommend, the same advertising information can be delivered toward users having the potential for higher appealing effects. The appealing effects of advertising information can be made higher by personalizing advertising information by using the critical point of the device specifications.

Basic operation of the comparison-type recommend is shown as, for example, the following (1) to (3).
(1) The user will not purchase a new product unless the specification is improved more than the device possessed by the user (hereinafter, also referred to as merely "possessed device"). Accordingly, a specification of the new product is compared with a specification of the possessed device of each user, and when both exceed a certain relation (or with respect to users exceeding the certain relation), advertising information for recommending purchase of the new product to the user is presented.
(2) The user is likely to want a new product in which performance tends to be short when the user routinely uses the possessed device has been improved. On the other hand, when performance which is not replace necessary for the user is improved, the user will not the possessed device with a new product by purchase. Accordingly, a specification item close to the upper limit of performance at the time of routine use is extracted as a critical point based on a result obtained by compiling operation logs (operation status data) of the possessed device by the user. Then, advertising information recommending purchase of a new product in which the specification has been drastically elevated or improved in the critical point will be provided to the user.
(3) When there is difference of performance between the possessed device and an external peripheral device to be connected to the device, the device having lower performance is replaced with a new product having higher performance to remove bottlenecks, as a result, use environment of the device is improved. Accordingly, when the difference of performance occurs between the possessed device and the peripheral device, advertising information which recommends replacement of the possessed device or the peripheral device to a new product will be provided to the user.

The correspondence between events (status) in which the comparison-type recommend should be activated and actions of the comparison-type recommend is shown in the following table 1.

**Table 1**

| Event | Action |
|---|---|
| Occupation rate of CPU is frequently 100% | Recommend higher PC Recommend higher PC |
| Capacity of HDD is close to the upper limit | Recommend device having large capacity |
| Connect SD video recorder to HD television | Recommend BDR |
| Telescopic side of camera is frequently used | Recommend telescopic lens or camera with telescopic function |
| Imaging on macro-side of camera is frequent | Recommend macro imaging |
| Writing frequency of memory is high | Increase memory capacity |
| transmission/reception of large-sized file is frequent | Recommend device having higher transfer speed |

When it is clear that the user uses performance at the limit of the possessed device from actions of the user (operation logs of the possessed device), recommendation of a new product having higher performance is likely to lead to purchase.

In order to optimize the selection of users to whom advertising information of a new product is delivered as well as to personalize the advertising information, it is necessary to acquire operation logs of the possessed device of each user and to extract critical points concerning the possessed device. A method of acquiring operation logs and critical points are shown in the following table 2.

**Table 2**

| Device size | Explanation | |
|---|---|---|
| Camera/video camera | Acquisition method | Acquire logs when taking images, Acquire from Exif |
| | Points | Verify zoom magnification Set ISO |
| | | Micro-imaging (focus position) |
| | | Image taking amount (comparison with respect to size of mounted memory card) |
| | | Battery (number of times of battery shutoff) |
| Video recorder | Acquisition method | Acquire logs when operating recorded files |
| | Points | Ratio of remaining capacity of HDD (Set recording quality) |
| | | Frequency of double recording (number of TV viewing times) |
| PC | Acquisition method | System tool, IP address, GPS |
| | Points | Charge rate, Moving rate, Battery shutoff frequency, Movement frequency |
| Audio player | Acquisition method | System microcomputer |
| | Points | Vol Records such as use of maximum volume) |
| Portable music player | Acquisition method | Battery management function |
| | Points | Battery operation rate |
| | | ontent capacity (with respect to a memory) |
| Cellular phone device | Acquisition method | |
| | Points | Continuous communication time |
| | | Battery shutoff frequency |
| Motor vehicle | Acquisition method | Various sensor information (acquire by the system microcomputer) |
| | Points | Output torque (Engine revolution speed) |
| | | Maximum speed |

In an advertising information providing system according to the embodiment of the invention, an information processing apparatus operating as an advertisement delivery server collects operation information of the possessed device currently used by each user, extracts critical points in specifications of the possessed device and generates advertising information of a new product to be recommended (or to personalize advertising information with respect to each user) to provide the information. The advertising information to be provided is determined to have the display contents in which the user can instinctively understand the difference of the extracted critical points.

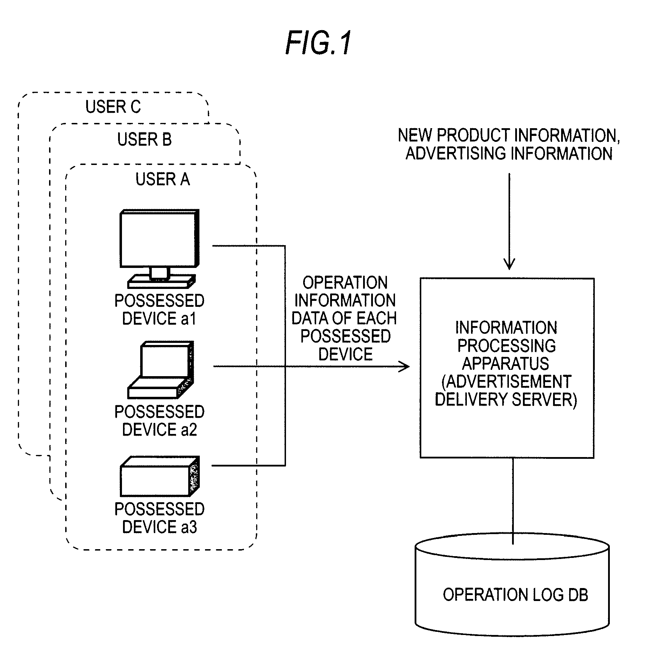

Fig. 1 is a view schematically showing a configuration of the advertising information providing system according to an embodiment of the invention. The shown system includes possessed devices of the user and an advertisement delivery server providing advertising information to the user.

Each user has one or more possessed devices. Then, operation logs in accordance with the routine use by the user are collected by each possessed device.

When the advertisement delivery server receives operation logs from each user by an optional method, the server stores the logs by making a database. To the advertisement delivery server, new product information concerning specifications of new products and so on and advertising information are supplied from manufacturers (or agents entrusted by manufacturers) and so on. Then, the advertisement delivery server provides advertising information to the user by the above comparison-type recommend.

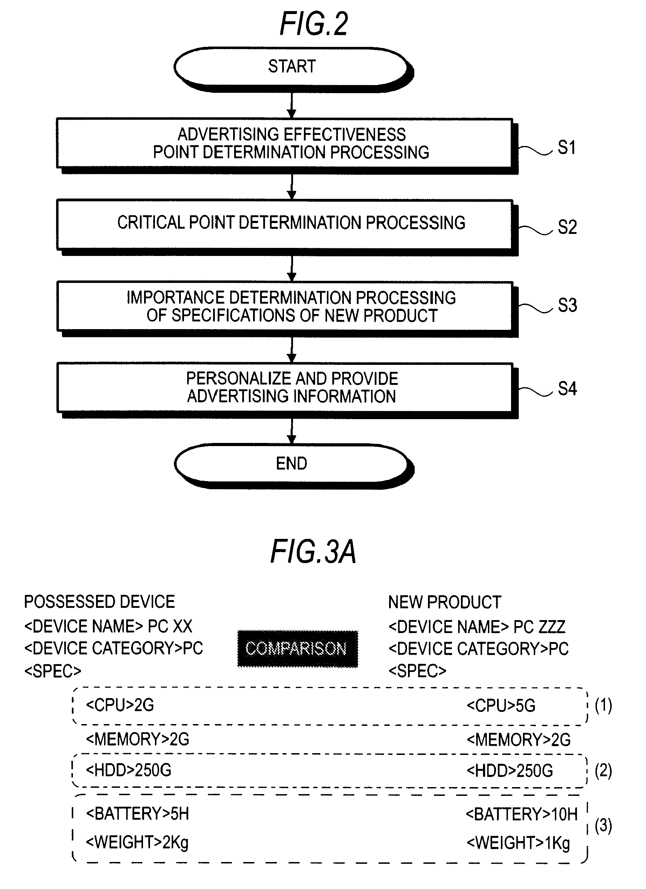

Fig. 2 shows a schematic processing procedure for providing advertising information to the user by the advertisement delivery server in the advertising information providing system according to the embodiment of the invention in a form of a flowchart. The processing procedure is activated, for example, when new advertising information is pushed to the system or in response to generation of a request for providing the user with advertising information by an optional event.

First, advertising effectiveness point determination processing is performed concerning advertising information (Step S1). Specifically, specifications of a new product to be an advertising candidate are compared with specifications of the possessed device of the user to determine whether there exist specification items to be appealed, namely, there exist appealing points or not. The processing is performed with respect to each user who possesses devices belonging to the same product category as the new product to be processed.

For example, in the case where the product category is a PC (Personal Computer), whether the capacity of an HDD (Hard Disk Drive) or a processing ability of CPU (Central Processing Unit) (the number of operation clocks and the like) is drastically improved in the new product as compared with the possessed device of the user.

Next, critical point determination processing of possessed devices of each user is performed (Step S2). Specifically, a specification item to be a critical point of the possessed device is extracted based on operation logs of the possessed device of the user. The specification item close to the upper limit of performance at the time of routine use will be the critical point desired to be elevated or improved. The processing is performed with respect to each user who possesses the device. In the case where the user possesses plural devices, the processing is sequentially performed to respective devices.

In the case where a PC is taken as an example of the possessed example of the user, when the CPU becomes in an overload state in many cases though the remaining capacity of the HDD is enough at the routine use, appealing effect is low when the difference of capacities of the HDD as advertising information of the new product is appealed. Therefore, the CPU will be a critical point for the possessed by the new product.

Next, importance determination processing of specifications of the new product is performed based on the results of Step S1 and Step S2 (Step S3). That is, whether the specification item which has been drastically improved as compared with the possessed device of the user in the specifications of the new product to be a target for advertisement which has been extracted in Step S1 is a critical point for the user is determined in Step S2.

In the above example of the PC, when both the capacity of the HDD and the processing ability of the CPU have been drastically improved as compared with the possessed device of the user as well as the critical point for the user is not the HDD but the CPU, the CPU will be the most important specification item in specifications of the new product.

Then, advertising information with respect to the user is created and provided to the user (Step S4). That is, the advertising information is personalized by taking the specification item determined to be important in Step S3 as a point of advertisement.

When it is determined that the CPU is the important specification item for the target possessed device of the user in the above example of the PC, the appealing effect is expected to be increased by personalizing advertising information of a new product with respect to the user so that the performance of the CPU is emphasized.

Here, a specific example of the processing flow of providing advertising information when the PC is the target product will be explained with reference to Figs. 3A to 3C.

As shown in Fig. 3A, assume that the possessed device of the user is "PC XX" and the new product is "PC ZZZ". In Step S1, comparison processing with respect to each specification item is performed between the possessed device and the new product to check whether the performance has been improved in the new product or not. The determination result in the shown example will be described as follows:
(1) An operation clock of the CPU has been speeded up from 2GHz to 5GHz. Therefore, the performance of the CPU has been improved and this specification item is regarded as the appealing point of the new product.
(2) The storage capacity of the HDD is not increased from 250GB. Therefore, this specification item is not regarded as the appealing point of the new product.
(3) The duration of a battery is increased from 5 hours to 10 hours. In addition, the device weight is reduced from 2kg to 1kg. Therefore, this specification item is regarded as the appealing point of the new product.

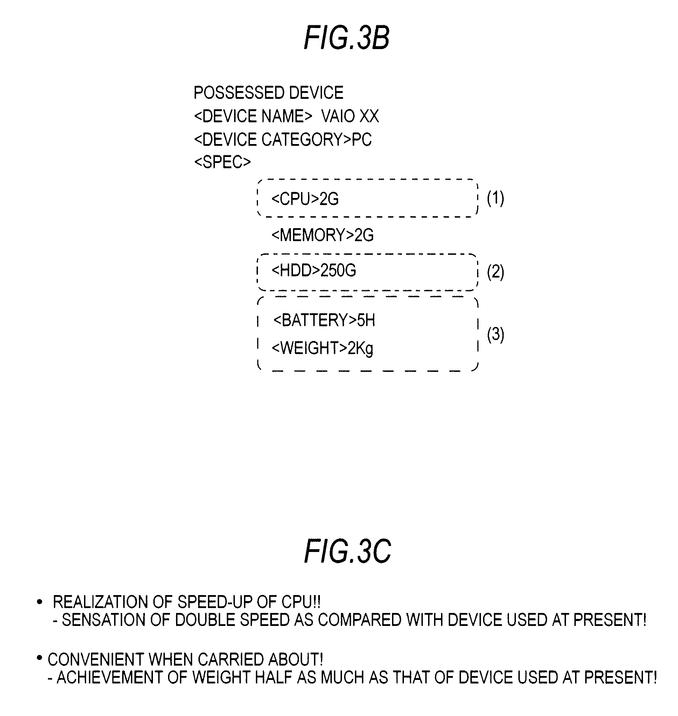

Next, in Step S2, the specification item to be the critical point of the possessed device is extracted based on operation logs of the possessed device by the user. As shown in Fig. 3B, the specifications of the possessed device "PC XX" of the user includes specification items which are 2GHz CPU operation clock, 2GB memory size, 250GB HDD capacity, 5-hours battery duration, 2kg device weight and so on. On the other hand, operation logs of the possessed device are as follows:
(1) The operation rate of the CPU tends to be high load.
(2) The used capacity of the HDD tends to in the vicinity of 100GB.
(3) The possessed device is rarely carried around.

In the above case, it is meaningless that the capacity of the HDD is increased as compared with the present possessed device of the user. As the user does not carry the possessed device, the need of reducing the device weight is low. On the other hand, it can be considered that the CPU should be speeded up as compared with the present possessed device of the user. Accordingly, the operation clock of the CPU is extracted as the critical point of the possessed device of the user.

Next, in Step S3, importance determination processing of specifications of the new product is performed based on results of Step S1 and Step S2.

In the above case, in Step S1, the operation clock of the CPU and the device weight are extracted as appealing points of the new product. In Step S2, the operation clock of the CPU is extracted as the critical point of the user. In Step 3, it can be seen that the operation clock has been speeded up in the new product and the user is likely to desire the speed-up of the CPU in view of the determination results. According to this, the user can be selected as the user appropriate as the providing destination of advertising information, namely, the user having the potential for high appealing effect.

In Step S4, the speed-up of the CPU and the device weight corresponding to critical points of the possessed device in specification items included in the new product are appealed in order, thereby personalizing information to be advertising information having higher appealing effects.

Fig. 3C shows catch phrases for appealing these critical points are shown as examples. In the shown advertising information, "speed-up of the CPU" which is the critical point to be dissolved by purchasing the new product is declared. A numeric value such as "double" is calculated based on device specification information (different according to possessed devices of the user). There may be a case in which the performance such as the operation rate of the CPU is not calculated easily based on an operation clock frequency, therefore, information for comparison between the new product and related-art products may be provided by an external server. In the advertising information, "carryability" due to the reduction of device weight which is the appealing point of the new product is cited. The weight rate differs according to possessed devices of the user, however, it can be calculated simply based on device specifications.

In the above device, two points which are the appealing point of the new product extracted in Step S1 and the critical point of the possessed device extracted in Step S2 are conditions for performing comparison recommend. However, it is also possible to perform comparison recommend by adding conditions set by conditions of the user.
(1) Purchase price range
(2) Replacement cycle by purchase

In the case where purchase price range is considered by the user as a condition in which the user replaces the possessed device with the new product, for example, when whether there is an appealing point in the new product or not is determined in Step S1, or when the importance is determined in Step S3, threshold values in the purchase price range are compared. Therefore, in the case where the price exceeds the purchase price range in which the user plans to purchase the product, useless provision of advertising information can be suppressed even when the product is a new product with high performance.

The frequency of replacing the possessed device with the new product by purchase differs according to the user. Some users continue to use the same possessed device for relatively a long period of time and some users frequently replace the device with the new one. Accordingly, the threshold value used when determining whether there is an appealing point in the new product or not in Step S1 may be controlled according to the replacement cycle of the user. Therefore, advertising information can be frequently provided to the user having a short replacement cycle to promote sales as well as the frequency of providing advertising information can be suppressed to the user having a long replacement cycle.

It is possible to use not only actions or trends of the user to be the providing destination of advertising information but also actions or trends of other user as conditions when performing comparison recommend.

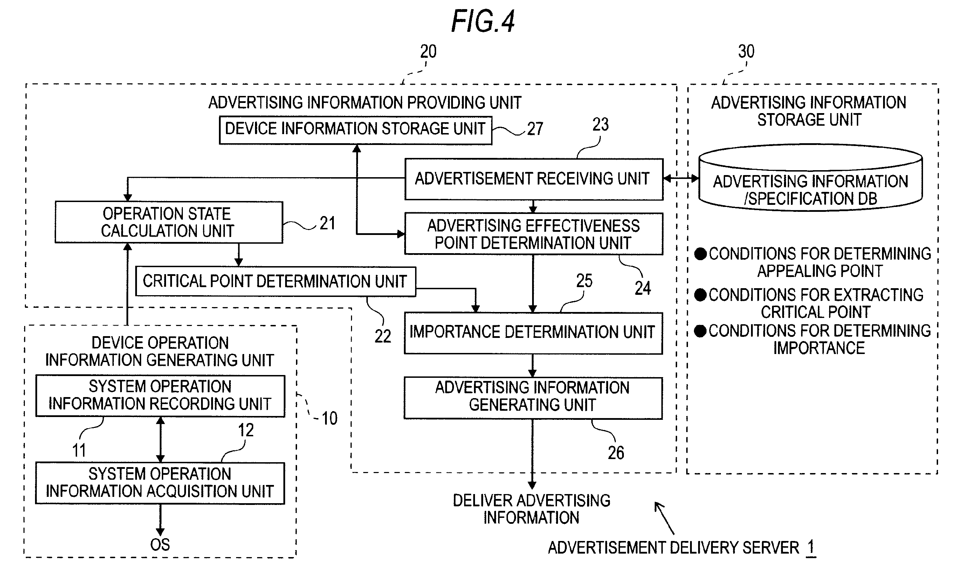

Fig. 4 shows a functional configuration for performing the processing procedure shown in Fig. 2 by the advertisement delivery server. A shown advertisement delivery server 1 includes a device operation information generating unit 10, an advertising information providing unit 20 and an advertising information storage unit 30.

The device operation information generating unit 10 includes a system operation information recording unit 11 and a system operation information acquisition unit 12. Each user has one or more possessed devicees such as a PC, a camera, a video camera, a video recorder, a television and a portable music player. The system operation information acquisition unit 12 acquires operation logs of the possessed devices from each user as operation state information and records the logs in the system operation information recording unit 11. A method of acquiring operation logs from each possessed device is optional. For example, when the possessed device is a device which can be connected to a communication medium such as Internet, the system operation information acquisition unit 12 acquires operation logs through the communication medium or the operation logs may be transmitted from the possessed device.

The advertising information storage unit 30 stores advertising information and specifications concerning new products in a database. The advertising information storage unit 30 also includes conditions for determining the appealing point of the new product (for example, threshold values for comparing performance according to specification items between the possessed device of the user and the new product and so on), conditions for extracting critical points of the possessed device of the user (threshold values for evaluating operation logs) and conditions for determining importance of specifications in the new product (threshold values for comparing the appealing point of the new product with the critical point of the possessed device of the user).

The advertising information providing unit 20 includes an operation state calculation unit 21, a critical point determination unit 22, an advertisement receiving unit 23, an advertising effectiveness point determination unit 24, an importance determination unit 25, an advertising information generating unit and a device information storage unit 27.

The advertising information providing unit 20 activates providing processing of advertising information triggered by receiving advertising information by the advertisement receiving unit 23 from the advertising information storage unit 30 (for example, the push of advertizing information from the advertising information storage unit 30 or an external server).

When the operation state calculation unit 21 reads operation logs concerning the possessed devices of each user corresponding to the new product to be advertized by advertising information (in the same product category as the new product) from the system operation information recording unit 11 in the device operation information generating unit 10, the operation state calculation unit 21 converts the operation logs into a format of device operation state data suitable for the critical point determination processing.

The device information storage unit 27 stores specifications of possessed devices of respective users. The advertising effectiveness point determination unit 24 compares specifications of the new product with specifications of the possessed device of each user and determines whether there is a specification item to be appealed in the new product, namely, an appealing point or not.

The critical point determination unit 22 determines specification items to be the critical points of the possessed device by each user having possessed devices in the same category as the new product based on the operation state data of possessed device of each user, which has been calculated by the operation state calculation unit 21.

The importance determination unit 25 compares the appealing points of the new product determined in the advertising effectiveness point determination unit 24 with critical points of possessed device of each user determined by the critical point determination unit 2. Then, users having possessed devices in which the appealing point of the new product just corresponds to the critical point can be selected as users to whom the advertising information of the new product is provided. Additionally, the importance determination unit 25 determines importance of specification items included in the new product with respect to each user selected as the providing destination of the advertising information. As described above, the importance of the specification item fitting into the critical point of the possessed device of the selected user will be higher than other specification items.

The advertising information generating unit 26 personalizes advertising information for each user selected as the providing destination of advertising information based on the determination result of importance by the importance determination unit 25. Specifically, the advertising information is personalized by taking the specification item the importance of which is determined to be high as a point of advertisement, thereby generating advertising information having a higher appealing effect.

Then, the personalized advertising information is delivered to each user selected as the providing destination. However, the gist of the invention is not limited to a specific delivery method. For example, it is preferable that the advertising information is delivered to the user in a form of e-mail or that a web page for specific users is allowed to be browsed. Additionally, it is preferable to deliver advertising media such as leaflets.

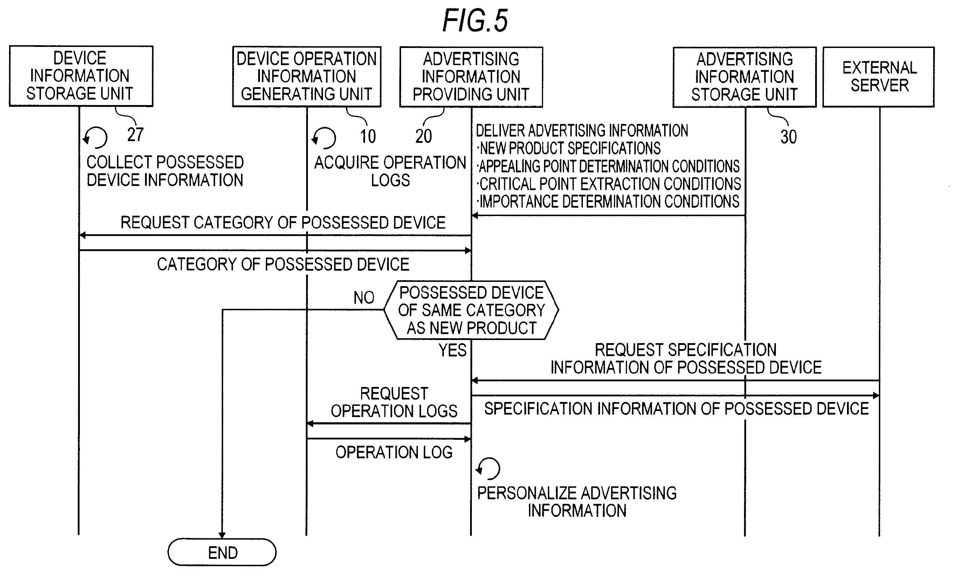

Fig. 5 shows an operation sequence for creating advertising information personalized according to each user in the advertisement delivery server 1 shown in Fig. 4.

The device information storage unit 27 sequentially collects information about one or more possessed devices of each user such as a PC, a camera, a video camera, a video recorder, a television and a portable music player.

The device operation information generating unit 10 acquires and records operation logs from respective one or more possessed devices owned by each user as operation status information.

The advertising information storage unit 30 request the advertising information providing unit 20 to perform delivery processing of advertising information when advertising information of the new product is pushed from an manufacturer or an agent thereof, or with optional timing such as at fixed intervals. At that time, the advertising information storage unit 30 transmits conditions for determining specifications of the new product, the appealing point of the new product, conditions for extracting critical points of the possessed device of the user and conditions for determining importance of specifications in the new product to the advertising information providing unit 20 with advertising information of the new product.

The advertising information providing unit 20 inquires of the device information storage unit 27 the product category of the possessed device of each user in response to the delivery request of the advertising information. Then, whether the product category of one or more possessed devices owned by each user is the same category as the new product to be advertized by the advertising information or not is determined.

When there does not exist the possessed device belonging to the same product category as the new product, it is difficult to select the user suitable for the offer of advertising information, that is, it is difficult to select the user to whom the new product is recommended by the comparison with specifications of the possessed device. Accordingly, the present processing routine is ended here.

On the other hand, when there exist possessed devices belonging to the same category as the new product, the user having such (one or more) possessed devices can be selected as the providing destination of advertising information.

When the user to be the providing destination of advertising information has been selected, the advertising information providing unit 20 requests specifications of the possessed device to, for example, an external server. The advertising information providing unit 20 also requests the device operation information generating unit 10 to generate operation information concerning corresponding possessed devices of the selected user.

In the advertising information providing unit 20, the critical points of the possessed devices are extracted by each user selected as the providing destination of advertising information as well as advertising information personalized so as to emphasize the critical points is generated to be delivered to the user.

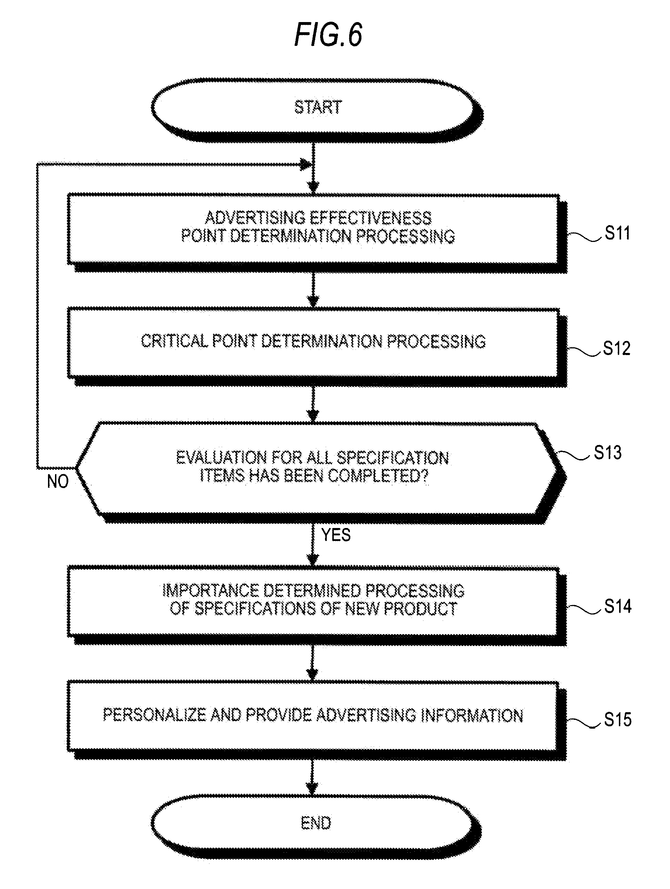

Fig. 6 shows a processing procedure for generating advertising information in the advertising information providing unit 20 in a form of a flowchart. The shown flowchart is activated when the possessed device in the same product category as the new product to be advertized in the advertising information is stored as device information, in other words, when the user to be the providing destination of advertising information has been selected.

When the possessed device to be the same product category as the new product to be advertized by the advertizing information has been found, the advertising effectiveness point determination processing (Step S11) and the critical point determination processing (Step S12) are sequentially executed by each specification item included in specifications of the new product (Step S13).

In the advertising effectiveness point determination processing, comparison of corresponding specification items is made between the new product and the possessed device of the user. For example, when the product category is a PC, performances are compared with respect to respective specification items such as the number of operation clocks the CPU, the storage capacity of the HDD, the memory size and so on of both devices. Then, the specification item in which the performance of the new product has been improved more than a given threshold as compared with the possessed device of the user is extracted as an appealing point of the new product with respect to the user.

In the critical point determination processing, operations logs of the possessed device with respect to each user having the same product category are acquired to check loads in respective specification items. Then, the specification item close to the upper limit of performance at the routine use of a certain user is extracted as a critical point for the user. For example, in the case where the product category is the PC, when the operation rate of the CPU tends to exceed a given threshold at the routine use by the certain user, the performance of the CPU will be the critical point of the possessed device of the user. Additionally, when the occupation rate of the used area in the HDD exceeds a given threshold, the storage capacity of the HDD will be the critical point of the possessed device of the user.

When the advertising effectiveness point determination processing and the critical point determination processing have been completed with respect to all specification items (Yes in Step S13), the importance of respective specification items is determined by comparing the result of the advertising effectiveness point determination processing with the result of the critical point determination processing (Step S14). That is, the importance is sequentially decided based on whether each specification item extracted as the appealing point in specifications of the new product corresponds to the critical point for the possessed device of the user.

In the case where the product category is the PC, when the number of operation clocks of the CPU in the new product is drastically speeded up as compared with the possessed device of the user and determined as the appealing point as well as the operation rate of the CPU is high at the routine use by the user and determined as the critical point of the possessed device, the appeal of the number of operation clocks of the CPU in the advertisement for the new product makes the appealing effect for the user higher, therefore, high importance is assigned. On the other hand, when the storage capacity of the HDD in the new product is determined as the appealing point but free space of the HDD is sufficient in the possessed device of the user and not determined as the critical point, the appeal of the storage capacity of the HDD in the advertisement of the new product does not leads to the high appealing effect for the user, as a result, low importance is assigned.

Then, advertising information personalized for each user is generated based on the importance of each specification item of the new product and delivered to each user (Step S15). For example, when the product category is the PC and the CPU is determined as the important specification item for the certain user, advertising information of the new product with respect to the user is personalized so as to emphasis the performance of the CPU.

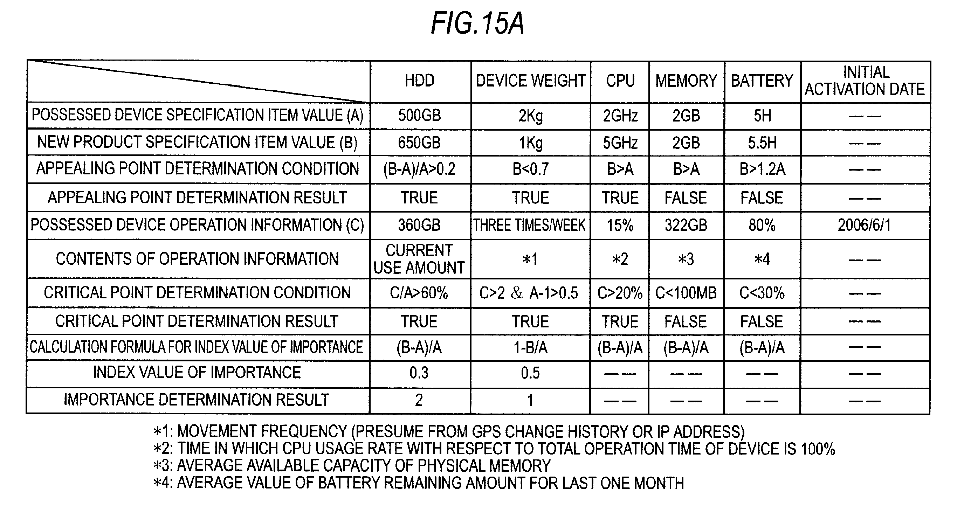

In Figs. 15A to 15C, determination conditions and determination results of appealing points in the new product, determination conditions and determination results of critical points in the possessed device of the user, determination conditions and determination results of importance, calculation methods and calculation results of data for advertisement in respective specification items in the case where the product category is the PC are shown in a chart form. In the following description, a processing procedure for personalizing advertising information concerning the new product with respect to the user who owns the PC will be specifically explained with reference to Figs. 15A to 15C.

In the example shown in Figs. 15A to 15C, the product category of the PC has five kinds of specification items which are the HDD capacity, the device weight, the number of CPU operation clocks, the memory capacity and the battery duration. However, the gist of the invention is not limited to particular specification items according to each product category.

As described above, the appealing point of the new product is determined based on comparison of corresponding specific items between the new product and the possessed device. The determination condition of the appealing point is set with respect to each specification item, and the specification item satisfying the determination condition is determined as the appealing point. When a specification item value of the possessed device is A and a specification item value of the new product is B, the appealing point determination condition of the HDD capacity is represented as (B-A)/A>0.2, the appealing point determination condition of the device weight is represented as B<0.7A, the appealing point determination condition of the number of CPU operation clocks is represented as B>A, the appealing point determination condition of the memory capacity is represented as B>A and the appealing point determination condition of the battery duration is represented as B>1.2A.

In the example shown in Fig. 15A, the HDD capacity of the possessed device (A) is 500GB, whereas the HDD capacity of the new product (B) is 650GB, which satisfies the appealing point determination condition (B-A) /A>0.2, therefore, the HDD of the new product is determined as TRUE, namely, as the appealing point. The device weight of the possessed device (A) is 2kg, whereas the device weight of the new product (B) is 1kg, which satisfies the appealing point determination condition B<0.7A, therefore, the device weight of the new product is determined as TRUE, namely, as the appealing point. The number of CPU operation clocks of the possessed device (A) is 2GHz, whereas the number of CPU operation clocks (B) of the new product is 5GHz, which satisfies the appealing point determination condition B>A, therefore, the CPU of the new product is determined as TRUE, namely, as the appealing point. The memory capacity of the possessed device (A) is 2GB, whereas the memory capacity of the new product (B) is 2GB, which does not satisfy the appealing point determination condition B>A, therefore, the memory of the new product is determined as FALSE, that is, the memory does not correspond to the appealing point. The battery duration of the possessed device (A) is 5 hours, whereas the battery duration of the new product (B) is 5.5 hours, which does not satisfy the appealing point determination condition B>1.2A, therefore, the battery of the new product is determined as FALSE, that is, the battery does not correspond to the appealing point.

The critical point of the possessed device is determined based on the comparison result between operation information shown by operation logs in each specification item and the specification item value of the possessed device, or the analysis result of operation information. When operation information C concerning the HDD is the current use amount, the critical point determination condition of the HDD is C/A>60% (A is a corresponding specification item value of the possessed device). When the operation information C concerning the device weight is movement frequency, the critical point determination condition of the device weight is C>2 as well as A-1>0.5 (movement frequency can be measured by a GPS (Global Positioning System) mounted on the possessed device) or can be presumed based on change history of an IP address). When the operation information C concerning the CPU is the rate of a period of time in which the CPU usage rate with respect to the total operation time of the possessed device is 100% (or more than certain %), the critical point determination condition of the CPU is C>20%. When the operation information concerning the memory is the average available capacity of a physical memory, the critical point determination condition of the memory is C<100MB. The operation information C concerning the battery is the average value of the battery remaining amount for a past fixed period (for example, for a month), the critical point determination condition of the battery is C<30%.

In the example shown in Fig. 15A, the HDD capacity of the possessed device (A) is 500GB as well as the current use amount (C) is 360GB, which satisfies the critical point determination condition C/A>60%, therefore, the HDD of the possessed device is determined as TRUE, namely, as the critical point. The device weight of the possessed device (A) is 2kg as well as the movement frequency (C) is three times in a week, which satisfies the critical point determination condition C>2 as well as A-1>0.5, therefore, the device weight of the possessed device is determined as TRUE, namely, as the critical point. The operation information of the CPU (C) of the possessed device is 15%, which does not satisfy the critical point determination condition C>20%, therefore, the CPU of the possessed device is determined as FALSE, namely, as the CPU does not correspond to the critical point. The average available capacity of the physical memory (C) of the possessed device is 322MB, which does not satisfy the critical point determination condition C<100GB, therefore, the memory of the possessed device is determined as FALSE, namely, the memory does not correspond to the critical point. The average value of the battery remaining amount of the possessed device in a last one month indicates sufficient capacity which is 80%, which does not satisfy the critical point determination condition C<30%, therefore, the battery of the possessed device is determined as FALSE, namely, the battery does not correspond to the critical point.

The specification item in which it is difficult to calculate the operation information (C) from operation logs acquired from the possessed device will be dealt with as out of target in the critical point determination processing.

The importance of each specification item in the new product is determined by comparing the determination result of the appealing point with the determination result of the critical point of the corresponding specification item in the possessed device. In the example shown in Fig. 15A, the specification item in which both the determination result of the appealing point in the new product and the determination result of the critical point in the possessed deice are TRUE is determined to be important. Then, index values of importance in respective important specification items are calculated and importance of respective important specification items is prioritized based on the size of index values. Here, the index values of importance with respect to respective specification items are calculated from corresponding specification item values of the new product and the possessed device. When the specification item value of the possessed device is A and the specification item value of the new product is B (same as the above), a calculation formula of the index value of the HDD capacity is (B-A)/A, a calculation formula of the index value of the device weight is 1-B/A, a calculation formula of the index value of the number of CPU operation clocks is (B-A) /A, a calculation formula of the index value of the memory capacity is (B-A)/A and a calculation formula of the index value of the battery duration is (B-A)/A.

However, the specification item in which at least one of the appealing point determination result of the new product and the critical point determination result of the possessed device is determined as FALSE is no longer important, therefore, the calculation processing of the index value is omitted and the specification item is excluded from the importance determination processing. Additionally, it is difficult to determine the importance concerning the specification item in which the operation information (C) is not calculated from operation logs and excluded from the determination processing of the critical point, therefore, the calculation processing of the index value is omitted with respect to such specification item, and the item is excluded from the target for the importance determination processing.

In the example shown in Fig. 15A, the HDD capacity of the possessed device (A) is 500GB, whereas the HDD capacity of the new product (B)is 650GB, therefore, the index value of importance is 0.3. The device weight of the possessed device (A) is 2kg, whereas the device weight of the new product (B) is 1kg, therefore, the index value of importance is 0.5. On the other hand, it is determined that the CPU, the memory and the battery do not correspond to critical points, therefore, the calculation processing of the index value is omitted and these items are excluded from the importance determination processing. When the index values of importance respectively calculated with respect to the HDD and the device weight are compared, the value of the device weight is larger, therefore, the importance is prioritized in order of the device weight and the HDD. As described later, arrangement, an area size, a character font, an image size and a display order are determined based on the importance in each specification item.

Then, advertising information is personalized so as to appeal important specification items. At that time, the important specification items of the new product is not merely emphasized but data for advertisement is calculated by comparing the items of the new product with corresponding specific items of the possessed device, and the data for advertisement is inserted together, thereby increasing appealing effects of advertising information.

However, specification items which has been excluded from the importance determination processing because at least one of the appealing point determination result of the new product and the critical point determination result of the possessed device has been determined as FALSE are not important, in other words, it is not necessary to personalize advertising information, as a result, such specification items are excluded from the calculation processing of data for advertisement and the personalizing processing of advertising information.

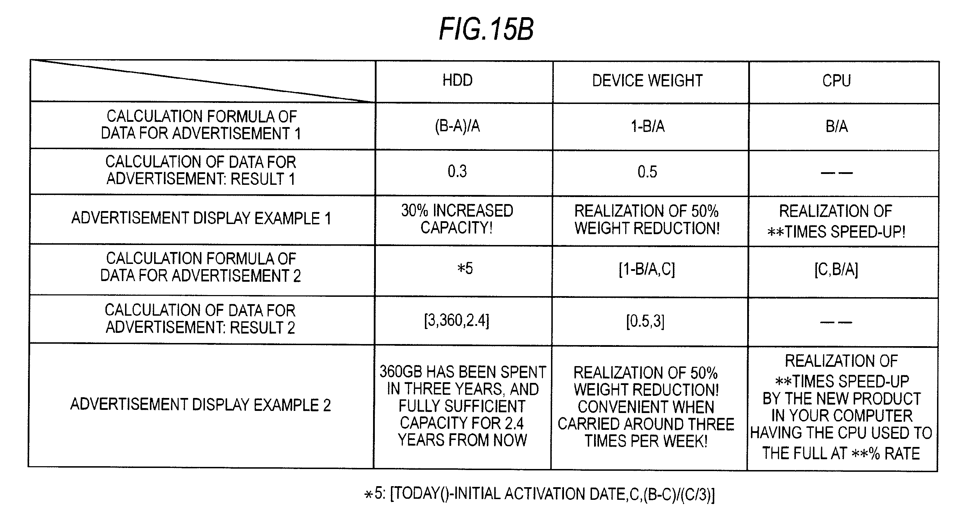

Assume that the specification value of the possessed device is A and the specification item value of the new product is B (same as the above). In an example shown in Fig. 15B, the calculation formula of data for advertisement of the HDD capacity is (B-A)/A, the HDD capacity of the possessed device (A) is 500GB, and the HDD capacity of the new product is (B) 650GB, therefore, the data for advertisement concerning the HDD is 0.3 (namely, the increased capacity is 30%). A personalized advertisement display example in this case will be "30% increased capacity!" by using the above data for advertisement. The calculation formula of data for advertisement of the device weight is 1-B/A, the device weight of the possessed device (A) is 2kg, and the device weight of the new product (B) is 1kg, therefore, the data for advertisement of the device weight is 0.5 (namely, 50% weight reduction). A personalized advertisement display example in this case will be "Realization of 50% weight reduction!" by using the data for advertisement. The calculation formula of data for advertisement of the number of CPU operation clocks is B/A, the calculation formula of data for advertisement of the memory capacity is B/A and the calculation formula of data for advertisement of the battery duration is (B-A)/A, however, the CPU, the memory and the battery are excluded from the importance determination processing, therefore, they are also excluded from targets for the calculation processing of data for advertisement as well as the advertisement display. Advertisement display examples of the CPU, the memory and the battery will be "Realization of **times speed-up", "**times increased capacity" and "**% increased duration of life" by using calculated data for advertisement respectively (respective data for advertisement will be written in "**".)

As another method of calculating data for advertisement, in addition to the above methods in which corresponding specification items are merely compared between the new product and the possessed device, a second method in which operation information of respective specification items obtained from the operation logs and lapsed time from a initial activation date of the possessed device are considered can be also cited.

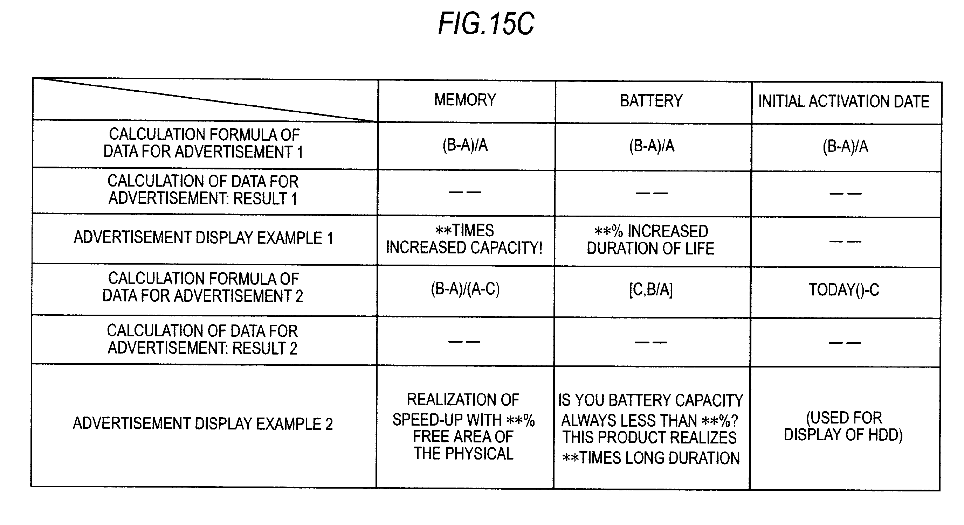

Assume that the specification item value of the possessed device is A, the specification item value of the new product is B and operation information of the specification item is C (same as the above). In another example shown in Fig. 15C, as data for advertisement of the HDD, three kinds of data which are three years as lapsed time from the initial activation date (TODAY( )-initial activation date), 360GB as the current use amount C and 2.4 years as a presumed remaining use period (B-C)/(C/3) are calculated. A personalized advertisement display example in this case will be "360GB has been spent in three years, and fully sufficient capacity for 2.4 years from now". As data for advertisement of the device weight, two kinds of data which are 50% as a degree of weight reduction 1-B/A and 3 as the number of times the device is carried around per week as the movement frequency C are calculated. A personalized advertisement display example in this case will be "Realization of 50% weight reduction! Convenient when carried around three times per week!". As data for advertisement of the CPU, two kinds of data which are the rate of time C in which the CPU usage rate is 100% and a degree of speed-up of the number of operation clocks B/A are calculated based on operation logs. A personalized advertisement display example in this case will be "Realization of **times speed-up by the new product in your computer having the CPU used to the full at **% rate". As data for advertisement of the memory, one kind of data which is the increased rate in the free area of the physical memory is calculated. A personalized advertisement display example in this case will be "Realization of speed-up with **% free area of the physical memory". As data for advertisement of the battery, two kinds of data which are the battery remaining amount C in a past fixed period and the increased degree of the battery capacity of the new product as compared with the possessed device are calculated. A personalized advertisement display example in this case will be "Is you battery capacity always less than **? This product realizes ** times long duration". However, respective specification items of the CPU, the memory and the battery are excluded from targets of calculation processing of data for advertisement and personal processing of advertizing information (same as the above).

According to the second method, advertising information is personalized by using plural data for advertisement concerning important specification items, therefore, it is expected that the appealing effects for the user are increased as compared with the case in which advertising information is personalized by merely using comparison results of specification item values between the new product and the possessed device.

Generally, data concerning specifications is placed on advertising information of the new product. For example, when the product category is the PC, specifications are the number of CPU operation clocks, the storage capacity of the HDD, the memory size, the screen size, the device weight and so on. When advertising information is personalized, the display format such as arrangement, the area size, the character font, the image size and the display order of respective specification items is determined based on the importance. In the case of advertising information showing respective specification items by moving pictures, the moving pictures are played back in order of importance.

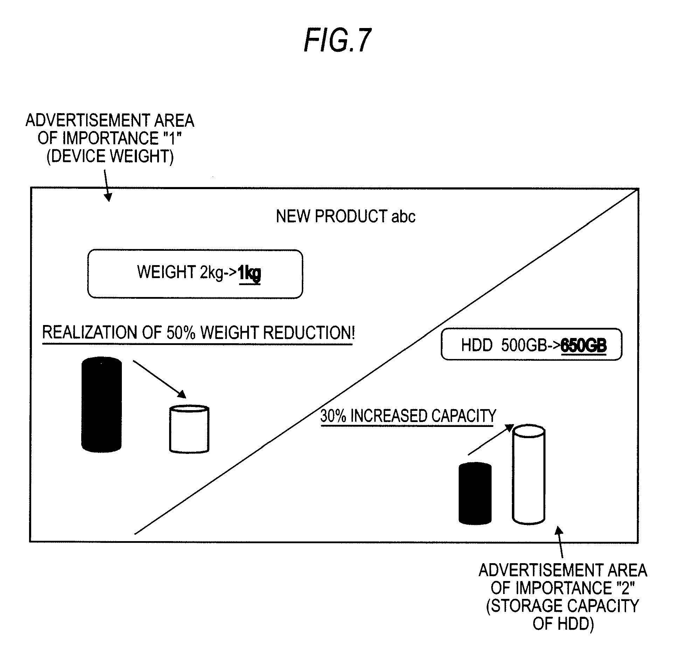

Fig. 7 shows an example of advertising information personalized by determining the display format of respective specification items based on the importance. The drawing shows an example of the case in which the product category of a target new product "abc" is the PC and the importance is determined in order of the device weight and the storage capacity of the HDD with respect to target users. The advertising information concerning the device weight having higher importance is arranged at the upper side and displayed with a larger size and larger character font, which appeals that the device weight has been drastically reduced in the new product to the user. Among specification items of the new product, the specification item whose performance has been drastically improved as compared with the possessed device of the user as well as which is critical in the routine use by the user is prominently displayed as shown in the drawing, which realizes advertising information having high appealing effects for the user.

The above described " the specification item whose performance has been drastically improved as compared with the possessed device of the user as well as which is critical in the routine use by the user among specification items of the new product" corresponds to a device specification which is a selling point for a manufacturer which sells the new product and particularly used by the user. Accordingly, the difference (degree in which the performance has been improved) of the device specification of the new product to be appealed to the user with respect to the possessed device of the user is presented in a visual format so as to be intuitively understandable, thereby increasing appealing effects of advertising information.

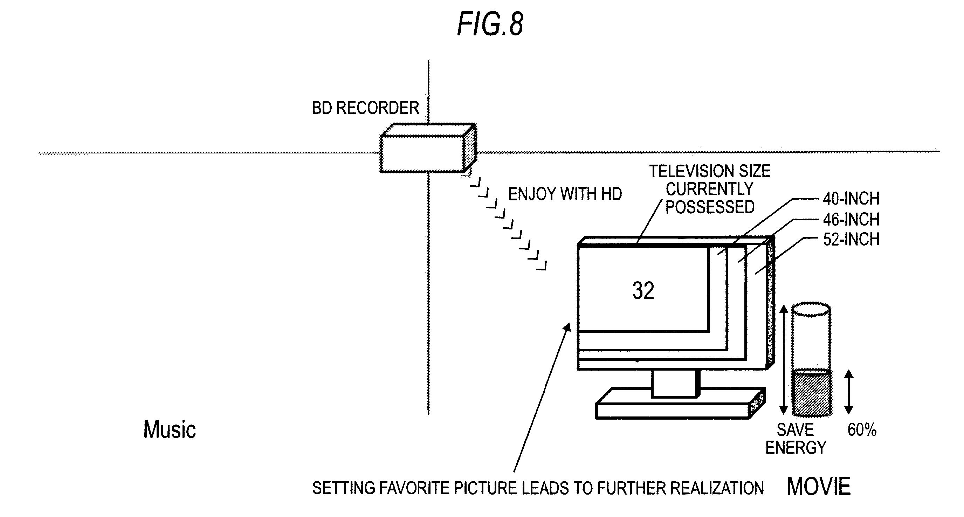

Fig. 8 shows an example of advertising information in which the device specification of the new product is presented in a visual format based on the performance difference with respect to the possessed device of the user. In the shown example, comparison of the screen size of the television is performed between the possessed device of the user and the new product.

In the case where the possessed device of the user is a BD (Blue-ray Disc) recorder which can enjoy recorded video with HD (High Definition) but does not match the screen size (resolution) of the television connected to the BD recorder, the advertising information shown in Fig. 8 allows the user to intuitively understand the performance difference, therefore, the appeasing effect for recommending replacement of the peripheral device by purchase is high.

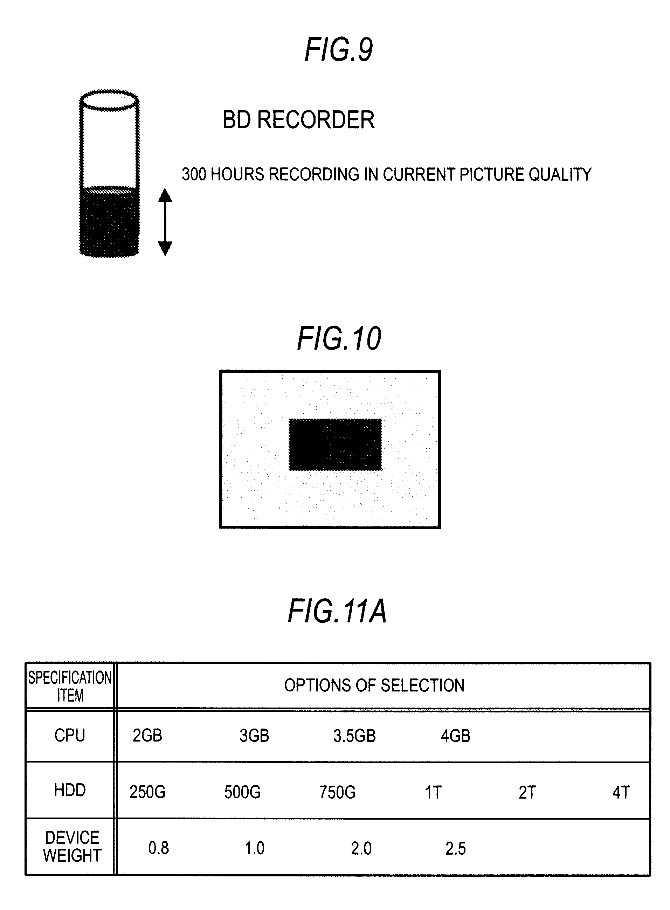

When the performance difference between the possessed device of the user and the new product is represented by "amount" such as power consumption or storage capacity, for example, the performance difference is shown in a visual format by the height of liquid poured in a cylinder as shown in Fig. 9 to allow the user to intuitively understand the performance difference.

In the above chart 1, as an example of events in which the comparison-type recommend should be activated and actions of the comparison-type recommend, "a telescopic lens or a camera with a telescopic function" is recommended when "the telescopic side of camera is frequently used". For example, as shown in Fig. 10, the performance difference can be shown in a visual format by displaying the possessed device of the user and the new product (a state in which the telescopic lens of the new product to be recommended is attached or the camera with the telescopic function as the new product) are superimposed at respective field angles to thereby allow the user to intuitively understand the performance difference.

The comparison-type recommend differs in a case where the new product is manufactured by the market production and in a case where the new product is manufactured by a BTO (Build to order) system. Because the product manufactured by BTO system has options for selecting specifications for the user, therefore, the appealing point of such new product varies according to the specification selected by the user.

Generally, in the BTO system, the user desires a new product more suitable for himself/herself at a lower cost. Therefore, a guideline can be derived, in which higher performance is desired concerning the specification item which has been cited as the critical point of the possessed device of the user, whereas excessive performance is not necessary concerning the specification item which has not been cited as the critical point (performance may be reduced). For example, the problem is solved on a condition that the new product does not exceed the allowable upper limit of price for the user, thereby determining a proper new product to be recommended to the user from a product lineup.

Here, the flow of realizing the comparison-type recommend of the new product in the BTO system will be explained, taking the possessed device of the user shown in Fig. 3B as an example. Specifications of the shown possessed device of the user "PC XX" includes specification items such as 2GHz CPU operation clock, 2GB memory size, 250GB HDD capacity, 5-hours battery duration and 2kg device weight.

First, specification items to be critical points of the possessed device are extracted based on operation logs of the possessed device of the user. The operation logs of the possessed device are as follows:
(1) The CPU operation rate tends to be high load.
(2) The used amount of the HDD tends to be in the vicinity of 100GB.
(3) The possessed device is rarely carried around.

In the above case, it is necessary to speed up the CPU as compared with the current state, however, it is meaningless that the capacity of the HDD is increased or that the device weight is reduced as compared with the current state. Therefore, it is possible to extract the CPU operation clock as the critical point of the possessed device of the user.

Next, minimum performances to be appealed to the user concerning respective specification items are calculated based on operation logs of the possessed device of the user. In the above example, the minimum performances of respective specification items are as follows.
(1) As the operation rate of the CPU is high, it is necessary to increase an operation clock frequency to 2.5GHz or more from 2GHz of the possessed device of the user.
(2) As the user does not need such large storage capacity of the HDD, the storage capacity of the new product may be, for example, approximately 500GB.
(3) As the user rarely carries around the possessed device, it is not necessary to reduce the device weight and the device may maintain the current weight of 2.0kg.

According to the above, assume that (the operation clock frequency of the CPU, the storage capacity of the HDD, the device weight)=(2.6GHz, 500GB, 2.0kg) are obtained as presumed necessary specification values with respect to respective specification items for obtaining appealing effects in the new product.

On the other hand, options for selecting respective specification items (the operation clock frequency of the CPU, the storage capacity of the HDD, the device weight) of the new product in the BTO system are as shown in Fig. 11A.

It is necessary to configure specifications of the new product so as to satisfy the presumed necessary specification values concerning more than the given number of specification items as well as low costs are desired in order to obtain sufficient appealing effects for the user enough to replace the current possessed device with the new product by purchase.

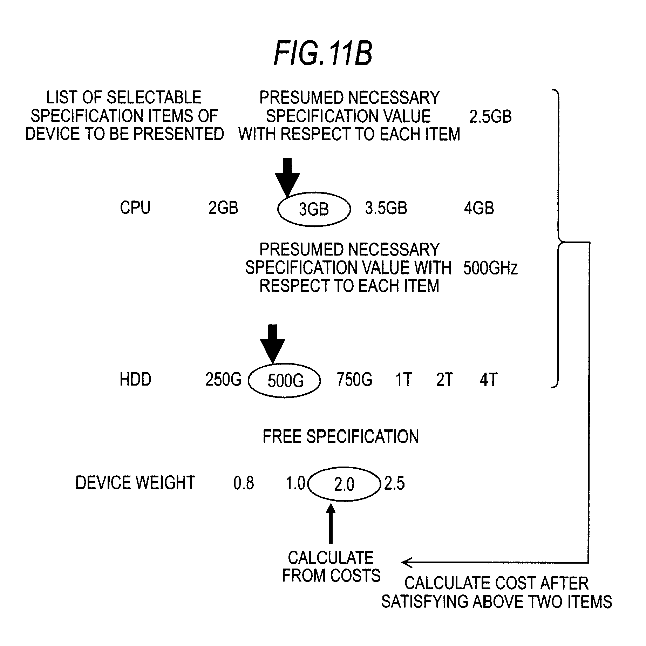

Fig. 11B shows specifications of the new product determined so as to satisfy presumed necessary specification values concerning 2 or more specification items (the operation clock frequency of the CPU, the storage capacity of the HDD) as well as based on cost calculation concerning the rest of specification items (device weight). In the shown example, 3GHz exceeding the presumed necessary specification value 2.5GHz is selected as the operation clock frequency of the CPU, 500GB corresponding to the presumed necessary specification item is selected as the storage capacity of the HDD and 2.0kg to be the lightest in weight within a range of allowable costs of the user as the device weight is selected. The advertising information in such case is personalized in written formats such as "price **yen" and "specifications **" to increase appealing effects.

In the above explanation, the new product satisfying presumed necessary specification values obtained based on operation logs of the possessed device is recommended. On the other hand, it is possible to increase the limit performance by attaching accessories to the device. Accordingly, in addition to the recommendation of the new product, a method of recommending accessories of the current possessed device for increasing the limit performance can be cited.

For example, when the product category is a digital camera, a memory card, a battery pack and an optical lens can be cited as accessories for increasing the limit performance. Parts to be critical points of the current possessed device of the user can be absolved by attaching accessories. Alternately, presumed necessary specification values calculated based on operation logs of the possessed device can be cleared by attaching accessories.

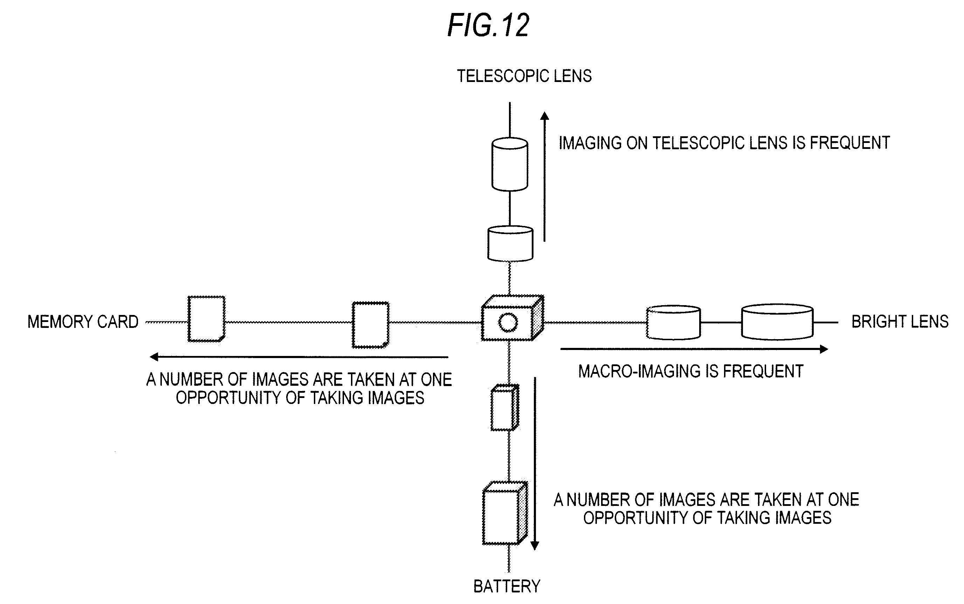

In the case where a number of images are taken at one opportunity of taking images, the memory card having larger storage capacity and the battery pack having larger capacity should be recommended. In the case where imaging on telescopic side is frequent, a telescopic lens having larger magnification should be recommended. In the case where macro-imaging is frequent, a brighter lens should be recommended. Fig. 12 shows and example of advertising information for recommending accessories of the digital camera. In the shown example, critical points to be absolved by attaching respective accessories or presumed necessary specification values to be cleared are presented in a visual format, therefore, appealing effects of advertising information for recommending accessories are increased.

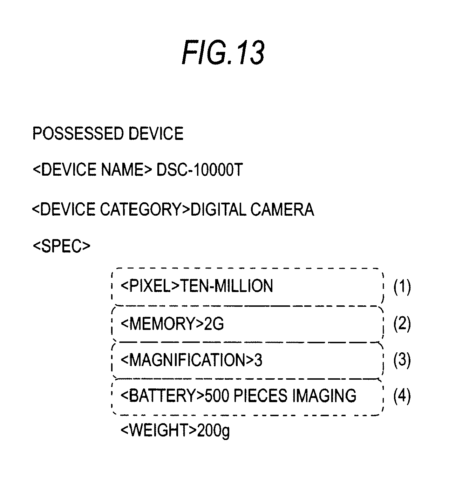

Fig. 13 shows performances of the possessed device of the user in respective specification items when the product category is the digital camera. Specifications of a possessed device of the user "DSC-10000T" includes specification items such as the ten-million pixels, a 2GB memory, three-times optical magnification, battery duration for 500 pieces of images, 200g device weight and so on. Specifications of the device can be written by using structured description language such as XML (extensible Markup Language).

In the drawing, the number of pixels is an invariable value of the possessed device, therefore, performance is not improved unless the user replaces the device with a new product by purchase. On the other hand, the memory size, the optical magnification and the battery duration can improve the device body by attaching accessories without replacing the device with the new product.

Therefore, when specification items to be critical points of the possessed device are extracted based on operation logs of the possessed device of the user as well as minimum performances concerning respective specification items which can be appealed to the user are calculated, it is possible to recommend purchase of accessories instead of purchase of the new product with respect to specification items in which accessories can be attached as described below.
(1) When frequency of writing image data and so on to the memory is high, attachment of a 8GB memory is recommended.
(2) When frequency of taking images with high lens magnification is high, a 10-times telescopic lens is recommended.
(3) When the number of taking images per unit time is high and the battery remaining amount is significant, a battery pack having large capacity is recommended.

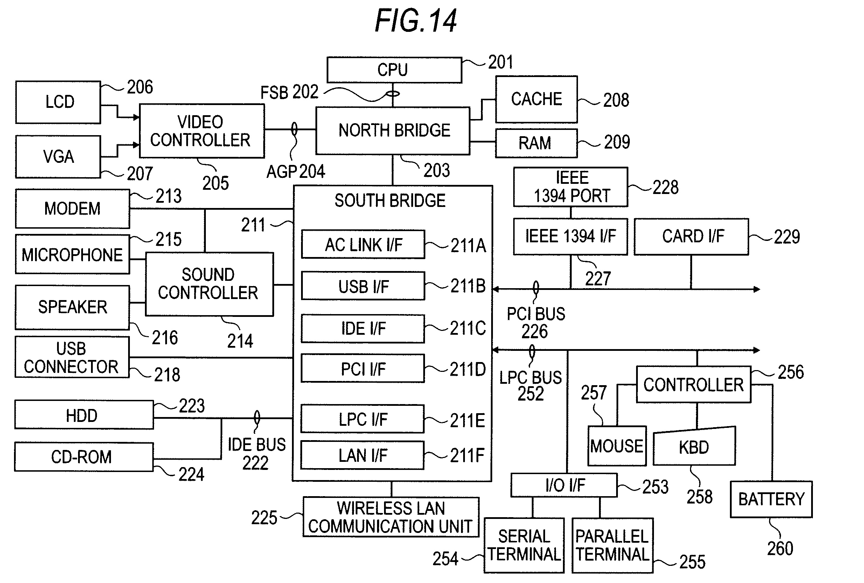

Fig. 14 shows a configuration example of an image processing apparatus operating as an advertisement delivery server. Part of the possessed device of the user (for example, the product category is the PC) is also configured as shown in the drawing.

A CPU 201 executes various application programs under execution environment provided by an operating system.

The CPU 201 is connected to a front side bus (FSB) 202, and the FBS 202 is further connected to a north bridge 203. The north bridge includes an AGP (Accelerated Graphics Port) 204 and a hub interface 210.

The north bridge 203 is connected to a cache memory 208 and a RAM 209 as a main memory, which controls access operations to these memory devices. The RAM 209 includes, for example, a DRAM (Dynamic RAM), which stores programs executed by the CPU 201 or operation data necessary for operations of the CPU 201. The cache memory 209 includes a memory device which can execute operations of higher writing or reading such as a SRAM (Static RAM), which caches, namely, temporarily stores programs or data used by the CPU 201.

A video controller 205 is connected to the north bridge 203 through the AGP 204. The video controller 205 generates image data corresponding to data received from the CPU 201 or stores image data received from the CPU 201 in a built-in video memory (not shown) as it is as well as displays images corresponding to the image data in the video memory on an LCD 206 or on the VGA controller 207. The LCD 206 or the VGA controller 207 displays images, characters and the like based on data supplied from the video controller 205. Here, the VGA controller 207 indicates a display in a VGA (Video Graphics Array) system.

The north bridge 203 is connected to a south bridge 211 through the hub interface 210. The south bridge 211 includes an AC link interface 211A, an USB (Universal Serial Bus) interface 211B, an IDE (Integrated Drive Electronics) interface 211C, a PCI (Peripheral Component Interconnect) interface 211D, an LPC (Low Pin Count) interface 211E and a LAN interface 211F and so on, which controls input/output operations of various devices connected through devices connected to an AC link bus, an USB bus 217 and an IDE bus 222.

To the link bus 212, a modem 213, a sound controller 214 and the like are connected. The sound controller 214 takes audio from a microphone 215 and generates data corresponding to the audio to output the data to the RAM 209. The sound controller 214 also drives a speaker 216 to output audio to the speaker 216.

To the USB bus 217, a USB connecter 218 is connected, to which various USB devices can be connected. The USB interface 211B transmits data to external devices connected through the USB bus 217 and receives data from the devices.

The IDE interface 211C includes two IDE controllers which are a primary IDE controller and a secondary IDE controller, a configuration register and so on (not shown). To the primary IDE controller, an HDD (Hard Disk Drive) 223 is connected through the IDE bus 222. To the secondary IDE controller, an IDE device is electrically connected when the IDE device such as a CD-ROM drive 224 or the HDD (not shown) is mounted to another IDE.

A wireless LAN communication unit 225 is connected to a network by wireless LAN communication such as IEEE802.22a/b. The LAN interface 211F transmits data to the network connected to the wireless LAN communication unit 225 as well as receives data.

To an LPC bus 251, a ROM 252, an I/O (Input/Output) interface 253, and a controller 256 are connected. The ROM (Real Only Memory) 252 stores BIOS (Basic Input Output System) and so on. The BIOS includes basic input/output instruction group, controlling input/output of data between OS or application programs and peripheral devices.

To the I/O interface 253, a serial terminal 254 and a parallel terminal 255 are connected, performing serial input/output as well as parallel input/output of data with respect to devices connected to respective terminals. To the controller 256, user input devices such as a keyboard 258 and a mouse 257 can be connected. The controller 256 also has a function of monitoring terminal voltage of a battery 260 as a main power supply and controlling charge/discharge operations thereof.

To a PCI bus 226, a card interface 229, an IEEE 1394 interface 227 and other not-shown PCI devices are connected. The card interface 229 supplies data supplied from an expansion card (not shown) connected to a slot 230 to the CPU 201 or the RAM 209 as well as outputs data supplied from the CPU 201 to the expansion card connected to the slot 230. The IEEE 1394 interface 227 transmits/receives data complying with an IEEE 1394 standard (data stored in a packet) through an IEEE 1394 port 228.

The apparatus shown in Fig. 14 can be operated as the advertisement delivery server in the processing procedure shown in the drawing by, for example, executing given application programs by the CPU 201. The HDD 223 can store advertising information (including personalized advertising information) as well as can acquire device operation information from respective users or provide advertising information through the wireless LAN communication unit 225.

The present invention has been explained in detail with reference to the particular embodiment as the above. However, it is obvious that those skilled in the art can perform modification and alternation of the embodiment within a scope not departing from the gist of the invention. That is, the invention has been disclosed in a form of exemplification and description should not be interpreted in a restrictive manner. In order to determine the gist of the invention, claims should be taken into consideration.

The present application contains subject matter related to that disclosed in Japanese Priority Patent Application JP 2009-164395 filed in the Japan Patent Office on July 13, 2009, the entire contents of which is hereby incorporated by reference.

## Claims

1. An information processing apparatus comprising:
a receiving unit receiving operation logs of a first device possessed by a user; and
a control unit determining critical points of the first device based on the operation logs and personalizing advertising information corresponding to a second device which is different from the first device based on the critical points of the first device.

2. The information processing apparatus according to claim 1,
wherein the control unit acquires advertising information concerning the second device, determines appealing points of the second device to be advertising effectiveness by comparing specifications between the first device and the second device, determining importance of respective specification items included in the second device by comparing critical points of the first device and appealing points of the second device and personalizing advertising information for the user based on the determination result of importance.

3. The information processing apparatus according to claim 1 or 2,
wherein the control unit determines a specification item indicating that performance of the second device has been improved by a given value or more as compared with the first device as an appealing point of the second device by comparing the first device with the second device with respect to each specification item.

4. The information processing apparatus according to any of claims 1 to 3,
wherein the control unit extracts a specification item close to the upper limit of performance at the time of routine use by the user as a critical point of the first device by comparing performance of the first device with respect to each specification item with the operation logs.

5. The information processing apparatus according to any of claims 1 to 4,
wherein the control unit gives higher importance to the specification item to be the critical point of the first device among specification items determined as appealing points of the second device.

6. The information processing apparatus according to any of claims 1 to 5,
wherein the control unit performs appealing point determination processing of the second device or the importance determination processing of respective specification items included in the second device by considering at least one of a purchase price range of the second device or a replacement cycle by purchase of the first device.

7. The information processing apparatus according to any of claims 1 to 6,
wherein the control unit determines at least one of arrangement, an area size, a character font, an image size and a display order of respective specification items in advertising information of the second device based on the importance with respect to each specification item.

8. The information processing apparatus according to any of claims 1 to 7,
wherein, when the second device is manufactured by a BTO (Build To Order) system, the control unit predicts a necessary specification value with respect to the specification item extracted as the critical point of the first device, selecting an item satisfying the specification value predicted within a range of selection allowed in the second device and determining the item as an appealing point of the second device.

9. The information processing apparatus according to any of claims 1 to 8,
wherein one or more accessories can be attached to the second device, and
the control unit predicts a necessary specification value with respect to the specification item extracted as the critical point of the first device and determines an accessory satisfying the specification value predicted within a range of selection allowed in the second device as an appealing point of the second device.

10. An information processing method comprising the steps of:
receiving operation logs of a first device possessed by a user; and
determining critical points of the first device based on the operation logs and personalizing advertising information corresponding to a second device which is different from the first device based on the critical points of the first device.

11. A computer program written in a computer readable format so as to execute information processing for providing the user with advertising information concerning a second device on a computer, allowing the computer to function as:
a receiving unit receiving operation logs of a first device possessed by a user; and
a control unit determining critical points of the first device based on the operation logs and personalizing advertising information corresponding to the second device based on the critical points of the first device.
